# FASCICULE DE BREVET EUROPEEN

(11) **EP 4 334 415 B1**
(45) Date de publication et mention de la délivrance du brevet: **25.12.2024**
(21) Numéro de dépôt: 22727959.3
(22) Date de dépôt: 02.05.2022
(51) Int. Cl.: C10G 9/36, C10G 1/10, C10G 65/02, C10G 53/08, C10G 53/12, C10G 53/04, C10G 69/04, C10G 69/06, C10G 45/38, C10G 45/40, C10G 45/02, C10G 3/00, C10G 29/16, C10G 19/00, C10B 53/07, C10G 1/00

(54) **PROCEDE DE PURIFICATION DE CHARGE HYDROCARBONEE ET UTILISATION**
VERFAHREN ZUR REINIGUNG EINES KOHLENWASSERSTOFFROHSTOFFS UND VERWENDUNG DAVON
METHOD FOR PURIFYING HYDROCARBON FEEDSTOCK AND USE THEREOF

(30) Priorité: 03.05.2021 FR 2104617
(43) Date de publication de la demande: 13.03.2024
(73) Titulaire: TotalEnergies OneTech, 92400 Courbevoie (FR)
(72) Inventeur: COUSTHAM, Thomas, 14600 Ablon (FR); LEGRAND, Christine, 76210 Lanquetot (FR); COULOMBEAU-LEROY, Hélène, 76290 Montivilliers (FR)
(74) Mandataire: Fédit-Loriot
(86) Numéro de dépôt international: PCT/FR2022/050844
(87) Numéro de publication internationale: WO 2022/234226

(56) Documents cités:
- WO-A1-2020/020769

## Description

### Domaine technique de l'invention

La présente invention concerne un procédé de purification de charge hydrocarbonée et son utilisation subséquente dans des procédés de raffinage et de pétrochimie. Le procédé selon l'invention permet de purifier des charges contenant des huiles de pyrolyse de plastique notamment en vue de leur utilisation dans un procédé de vapocraquage.

### Arrière-plan technologique

Le brevet JP3776335 divulgue un procédé de déchloration et de désazotation d'une huile issue du craquage catalytique ou thermique de déchets plastiques qui est traitée à différentes températures jusqu'à 425°C pendant 30 minutes en présence d'une solution aqueuse d'un composé alcalin d'un métal alcalin ou alcalino-terreux à un pH supérieur ou égal à 7. Tous les hydroxydes de métaux alcalins ou alcalino-terreux naturels non radioactifs sont testés. Le produit de la réaction est ensuite séparé de la solution aqueuse alcaline par séparation liquide-liquide avec de l'éther éthylique.

La demande de brevet WO2012/069467 revendique un procédé d'élimination de siloxanes contenus dans une huile de pyrolyse de plastique par traitement thermique entre 200 et 350°C en présence d'un hydroxyde de métal alcalin à l'état solide ou en solution. L'utilisation d'hydroxyde de calcium à 5% en poids à 225°C ne permet pas d'obtenir de réduction du contenu en siloxanes (tableau 5, p.12 et lignes 9 à 11, p.13). A l'issue de la réaction, l'huile de pyrolyse est séparée par distillation sous pression réduite.

Le brevet FI128848 décrit un enchaînement de procédé comprenant un traitement thermique d'une huile de pyrolyse de plastique à au moins 200°C en présence d'une solution aqueuse alcaline. A l'issue de la réaction, l'huile de pyrolyse est séparée de la phase aqueuse alcaline. Un hydrotraitement final permet d'obtenir une charge de vapocraqueur qui est éventuellement lavée par une solution acide avant introduction dans le vapocraqueur.

La demande de brevet WO2020/02769 revendique un enchaînement de procédé de purification d'une composition comprenant au moins 20 ppm de chlore. De nombreux déchets liquides recyclables peuvent être traités, dont des huiles de pyrolyse de plastique. L'enchaînement de procédé comprend un traitement thermique de la charge en présence d'un hydroxyde de métal alcalin afin d'obtenir un abattement d'au moins 50% du contenu en chlore par rapport à la charge, suivi d'un hydrotraitement afin d'obtenir un nouvel abattement d'au moins 50% du contenu en chlore.

Ces documents ne présentent pas de moyens alternatifs pour purifier les huiles de pyrolyse de plastique.

### Résumé de l'invention

L'invention vise à proposer un procédé de purification d'huile de pyrolyse de plastique permettant de faciliter sa purification en permettant des performances d'abattement élevées.

A cet effet, l'invention concerne un procédé de diminution de la concentration en hétéroatomes d'une composition comprenant une huile de pyrolyse de plastique contenant au moins 20 ppm en masse de chlore tel que mesuré selon la norme ASTM D7359-18, comprenant :
(a). une mise en contact de ladite composition avec 0,1-50% en masse d'une base forte comprenant un cation de métal alcalin ou alcalino-terreux à l'état solide, pendant au moins 1 minute à une température d'au plus 450°C,
(b). une séparation entre la base forte comprenant le cation de métal alcalin ou alcalino-terreux et le produit issu de la mise en contact de ladite composition par lavage avec un solvant polaire non miscible avec le produit issu de l'étape (a).

Notamment, l'étape (a) est mise en oeuvre sans ajout de solvant autre que celui éventuellement déjà présent dans la composition. Autrement dit, au cours de l'étape (a), la base forte est de préférence ajoutée sous forme solide et non en solution.

L'étape (b) peut être réalisée à une température de 0 à 60°C, de préférence de 0° à 40°C, d'avantage de préférence de 0° à 30°C, notamment sans chauffage externe. Le lavage est typiquement mis en oeuvre à la pression atmosphérique.

Lors de l'étape (b), le rapport volumique du solvant polaire au produit issu de l'étape (a) peut être de 10/90 à 90/10, de préférence de 30/70 à 70/30, notamment de 40/60 à 60/40, ou dans un intervalle défini par toute combinaison des bornes précitées.

La composition peut comprendre en outre une huile de pyrolyse de biomasse telle que de *Panicum virgatum,* une huile de tall, une huile alimentaire usagée, une graisse animale, une huile végétale telle qu'une huile de colza, de canola, de ricin, de palme, de soja, une huile extraite d'une algue, une huile extraite d'une fermentation de microorganismes oléagineux tels que des levures oléagineuses, une huile de pyrolyse de biomasse telle qu'une biomasse lignocellulosique telle qu'une huile de pyrolyse de bois, de papier et/ou de carton, une huile obtenue par pyrolyse de meubles usagés broyés, des élastomères par exemple du latex éventuellement vulcanisé, ainsi que leurs mélanges.

La composition peut comprendre au moins 2% en masse d'une huile de pyrolyse plastique. Le reste peut alors être composé d'au plus 98% en masse d'un diluant ou solvant tel qu'un hydrocarbure et/ou d'un ou plusieurs des composants listés ci-dessus.

Le procédé peut comprendre en outre une étape dans laquelle :
(c). le produit issu du lavage à l'étape (b) est soumis à une (i) filtration, (ii) distillation, (iii) extraction par un solvant, ou (iv) la combinaison de deux ou trois des étapes (i) à (iii).

La mise en contact s'effectue de préférence pendant une durée de 1 minute à 48 heures, de préférence de 5 minutes à 2 heures, à une température de 50 à 450°C, de préférence de 90 à 350°C, plus préférentiellement de 150 à 350°C et à une pression absolue de 0,1 à 100 bars, de préférence de 1 à 50 bars.

Le lavage de l'étape (b) peut être effectué avec un solvant polaire non miscible avec le produit issu de l'étape (a) choisi parmi (i) les éthers de glycol, incluant notamment le polyéthylène glycol de formule chimique HO-(CH₂-CH₂-O)ₙ-H de masse molaire moyenne en masse de 90 à 800g/mol, par exemple le diéthylène glycol et le tétraéthylène glycol, le polypropylène glycol de formule chimique H[OCH(CH₃)CH₂]ₙOH de masse molaire moyenne en masse de 130 à 800g/mol, par exemple le dipropylène glycol et le tétrapropylène glycol, (ii) les dialkyl formamides, dans lesquels le groupe alkyl peut comprendre de 1 à 8 ou de 1 à 3 atomes de carbones, notamment le *N,N*-diméthyl formamide (DMF), (iii) les dialkyl sulfoxydes, dans lesquels le groupe alkyl peut comprendre de 1 à 8 ou de 1 à 3 atomes de carbones, notamment le diméthylsulfoxyde (DMSO) et le sulfolane, (iv) les composés comprenant un cycle furane, (v) des esters de carbonate cycliques, comprenant notamment de 3 à 8 ou de 3 à 4 atomes de carbones, notamment le carbonate de propylène et le carbonate d'éthylène, (vi) l'eau et leurs mélanges.

Un solvant polaire préféré, utilisé seul ou en mélange avec de l'eau, peut être un éther de glycol, en particulier le polyéthylène glycol de formule chimique HO-(CH₂-CH₂-O)ₙ-H de masse molaire moyenne en masse de 90 à 800g/mol ou le polypropylène glycol de formule chimique H[OCH(CH₃)CH₂]ₙOH de masse molaire moyenne en masse de 130 à 800g/mol, ou un composé comprenant un cycle furane, ou un ester de carbonate cyclique, en particulier le carbonate de propylène ou d'éthylène.

Dans un mode de réalisation préféré, le solvant polaire peut être choisi parmi le carbonate de propylène, le carbonate d'éthylène, le polyéthylène glycol de formule chimique HO-(CH₂-CH₂-O)ₙ-H de masse molaire moyenne en masse de 90 à 800g/mol, seul ou en mélange avec de l'eau.

Le lavage de l'étape (b) est effectué de préférence avec de l'eau.

L'eau utilisée peut présenter un pH acide, basique ou neutre. Un pH acide peut être obtenu par addition d'un ou plusieurs acides organiques ou inorganiques. Des exemples d'acides organiques utilisables comprennent l'acide citrique (C₆H₈O₇), l'acide formique (CH₂O₂), l'acide acétique (CH₃COOH), l'acide sulfamique (H₃NSO₃). Des exemples d'acides inorganiques sont l'acide chlorhydrique (HCl), l'acide nitrique (HNOs), l'acide sulfurique (H₂SO₄), l'acide phosphorique (H₃PO₄). Un pH basique peut être obtenu par addition d'oxydes de métaux alcalins et alcalino-terreux, d'hydroxydes alcalins et alcalino-terreux (par exemple NaOH, KOH, Ca(OH)₂) et des amines (par exemple triéthylamine, éthylènediamine, ammoniaque).

Une base forte préférée peut être choisie parmi LiOH, NaOH, CsOH, Ba(OH)₂, Na₂O, KOH, K₂O, CaO, Ca(OH)₂, MgO, Mg(OH)₂ et leurs mélanges.

L'invention peut également comprendre une étape additionnelle dans laquelle :
(d). le produit issu de l'étape (b) ou (c) subit une hydrogénation catalytique en une ou deux étapes.

Dans le cas où l'hydrogénation catalytique s'effectue en deux étapes, l'étape (d) s'effectue en une première étape (d-1) dans laquelle le produit issu de l'étape (b) ou (c) est hydrogéné à une température comprise entre 20 et 200°C, de préférence entre 30 et 90°C en présence d'hydrogène à une pression absolue comprise entre 5 et 60 bars, de préférence entre 20 et 30 bars et en présence d'un catalyseur d'hydrogénation comprenant Pd (0.1-10 % en poids) et/ou Ni (0.1-60 % en poids) et/ou NiMo (0.1-60 % en poids), et en une deuxième étape (c-2) dans laquelle l'effluent issu de l'étape (c-1) est hydrogéné à une température comprise entre 200 et 450°C, de préférence entre 200 et 340°C en présence d'hydrogène à une pression absolue comprise entre 20 et 140 bars, de préférence entre 30 et 60 bars et en présence d'un catalyseur d'hydrogénation comprenant NiMo (0.1-60 % en poids) et/ou CoMo (0.1-60 % en poids).

Le produit issu de l'étape (b) ou (c) ou l'effluent issu de l'étape (d) est de préférence purifié par passage sur un adsorbant solide afin de diminuer la teneur en au moins un élément parmi F, Cl, Br, I, O, N, S, Se, Si, P, As, Fe, Ca, Na, K, Mg et Hg et/ou la teneur en eau.

L'adsorbant peut être opéré en mode régénératif ou non régénératif, à une température inférieure à 400°C, de préférence inférieure à 100°C, plus préférentiellement inférieure à 60°C choisi parmi : (i) un gel de silice, (ii) une argile, (iii) une argile pilée, (iv) de l'apatite, (v) de l'hydroxyapatite et leurs combinaisons, (vi) une alumine par exemple une alumine obtenue par précipitation de boehmite, une alumine calcinée telle que Ceralox ^{®} de Sasol, (vii) de la boehmite, (viii) de la bayerite, (ix) de l'hydrotalcite, (x) un spinelle tel que Pural ^{®} ou Puralox de Sasol, (xi) une alumine promue, par exemple Selexsorb ^{®} de BASF, une alumine promue acide, une alumine promue par une zéolithe et/ou par un métal tel que Ni, Co, Mo ou une combinaison d'au moins deux d'entre eux, (xii) une argile traitée par un acide telle que Tonsil ^{®} de Clariant, (xiii) un tamis moléculaire sous la forme d'un aluminosilicate contenant un cation alcalin ou alcalino-terreux par exemple les tamis 3A, 4A, 5A, 13X, par exemple commercialisés sous la marque Siliporite ^{®} de Ceca, (xiv) une zéolithe, (xv) un charbon actif, ou la combinaison d'au moins deux adsorbants, l'adsorbant ou les au moins deux adsorbants retenant au moins 20% en poids, de préférence au moins 50% en poids d'au moins un élément parmi F, Cl, Br, I, O, N, S, Se, Si, P, As, Fe, Ca, Na, K, Mg et Hg et/ou de l'eau.

Selon un mode de réalisation préféré, l'adsorbant est régénérable, a une surface spécifique d'au moins 200 m²/g et est opéré dans un réacteur à lit fixe à moins de 100°C avec une VVH de 0,1 à 10 h⁻¹.

Selon un mode de réalisation supplémentaire, au moins une partie du produit issu de l'étape (b) ou de l'effluent issu de l'étape (c) ou (d) peut être :
(e). traité dans un vapocraqueur, et/ou
(f). traité dans un craqueur catalytique en lit fluidisé, et/ou
(g). traité dans un hydrocraqueur, et/ou
(h). traité dans une unité d'hydrogénation catalytique, et/ou
(i). utilisé tel quel ou séparé en des flux utilisables pour la préparation de carburants et combustibles tels que GPL, essence, diesel, fuel lourd et/ou pour la préparation de lubrifiants.

### Définitions

La Vitesse Volumique Horaire (VVH) est définie comme le volume horaire de flux de charge par unité de volume catalytique et est exprimée ici en h⁻¹.

Les termes « comprenant » et « comprend » tels qu'utilisés ici sont synonymes avec « incluant », « inclut » ou « contient », « contenant », et sont inclusifs ou sans bornes et n'excluent pas de caractéristiques additionnelles, d'éléments ou d'étapes de méthodes non spécifiés.

La spécification d'un domaine numérique sans décimales inclut tous les nombres entiers et, lorsque c'est approprié, des fractions de ces derniers (par exemple, 1 à 5 peut inclure 1, 2, 3, 4 et 5 lorsque référence est faite à un nombre d'éléments, et peut aussi inclure 1,5, 2, 2,75 et 3,80, lorsque référence est faite à, par exemple, une mesure.).

La spécification d'une décimale comprend également la décimale elle-même (par exemple, « de 1,0 à 5,0 » inclut 1,0 et 5,0). Toute plage de valeurs numériques récitée ici comprend également toute sous-plage de valeurs numériques mentionnée ci-dessus.

Les expressions % en poids et % en masse ont une signification équivalente et se réfèrent à la proportion de la masse d'un produit rapportée à 100g d'une composition le comprenant. Sauf indication contraire, les mesures données en parties par million (ppm) sont exprimées en poids.

L'acronyme GPL correspond à l'expression Gaz de Pétrole Liquéfié et à la définition communément admise dans l'industrie qui se réfère à une coupe d'hydrocarbures essentiellement constitués par des C3 (essentiellement du propane) avec quelques isomères en C4 dont essentiellement le n-butane et l'isobutène.

L'expression « huile de pyrolyse de plastique » ou « huile résultant de la pyrolyse de plastique » fait référence aux produits liquides obtenus à l'issue d'une pyrolyse de polymères thermoplastiques, thermodurcissables ou élastomères, seuls ou en mélange et généralement sous la forme de déchets. Le procédé de pyrolyse doit être compris comme un procédé de craquage thermique non sélectif. Le plastique pyrolysé peut être de n'importe quel type. Par exemple, le plastique à pyrolyser peut être du polyéthylène, du polypropylène, du polystyrène, un polyester, un polyamide, un polycarbonate, etc. Ces huiles de pyrolyse de plastique contiennent des paraffines, i-paraffines (iso-paraffines), diènes, alcynes, oléfines, naphtènes et aromatiques. Les huiles de pyrolyse de plastique contiennent également des impuretés telles que des composés organiques chlorés, oxygénés et/ou silylés, des métaux, des sels, des composés du phosphore, du soufre, et de l'azote.

La composition de l'huile de pyrolyse de plastique est dépendante de la nature du plastique pyrolysé et est essentiellement constituée d'hydrocarbures ayant de 1 à 50 atomes de carbone et d'impuretés.

L'expression « MAV » (acronyme de « Maleic Anhydric Value » pour « indice d'anhydride maléique ») fait référence à la méthode UOP326-82 qui est exprimée en mg d'anhydride maléique qui réagissent avec 1 g d'échantillon à mesurer.

L'expression « Nombre de brome » correspond à la quantité de brome en grammes ayant réagi sur 100 g d'échantillon et peut être mesuré selon la méthode ASTM D1159-07.

L'expression « Indice de brome » est le nombre de milligrammes de brome qui réagissent avec 100 g d'échantillon et peut être mesuré selon les méthodes ASTM D2710 ou ASTM D5776.

L'expression « solvant polaire non miscible avec le produit issu de l'étape (a) » au sens de la présente demande de brevet, correspond à un solvant polaire formant un mélange hétérogène avec ledit produit. On pourra considérer comme non miscible avec le produit, un solvant pour lequel on obtient un taux défini comme le rapport du volume de solvant polaire après lavage sur le volume de solvant polaire initial supérieur ou égal à 0,95, le volume de solvant polaire après lavage correspondant à une phase contenant ledit solvant polaire, non miscible avec le produit issu de l'étape (a) et récupérée après agitation puis décantation d'un mélange d'une partie par volume de solvant polaire avec vingt cinq parties par volume dudit produit à pression atmosphérique et à une température de 20°C.

L'expression « solvant polaire » au sens de la présente demande de brevet recouvre toutes les espèces chimiques, seules ou en mélange, susceptibles de solvater une composition comprenant une huile de pyrolyse de plastique, et comportant au moins une liaison covalente carbone-hydrogène, carbone-halogène, carbone-chalcogène ou carbone-azote et ayant un moment dipolaire non nul. Des solvants polaires acceptables incluent des compositions comprenant des composés hydrocarbonés qui comportent des hétéroatomes dans leur structure moléculaire, par exemple (i) des éthers de glycol tels que le polyéthylène glycol (PEG), l'éthylène glycol, le tétraéthylène glycol, le polypropylène glycol, par exemple un PEG avec une masse molaire moyenne de 200g/mol, (ii) des composés azotés, par exemple le N,N-diméthylformamide, (iii) des composés soufrés, par exemple le sulfolane ou le diméthylsulfoxyde, (iv) les composés comprenant un cycle furane (v) des ester de carbonate tels que le carbonate de propylène et le carbonate d'éthylène.

Il est entendu que le terme « solvant polaire » au sens de la présente définition inclut l'eau.

Le terme « solvant » inclut les « solvants polaires » précités et les solvants apolaires, qui comprennent par exemple tout type d'hydrocarbure saturé ou insaturé linéaire, ramifié, cyclique et/ou aromatique tel que pentane, cyclohexane, oct-1-ène, toluène ou *p*-xylène ou certains autres solvants à moment dipolaire nul comme le tétrachlorométhane ou le disulfure de carbone.

Le choix du solvant se fait par essais avec des techniques classiques connues de l'homme du métier et dépend de la nature de la charge à solvater et des impuretés à éliminer.

Les points d'ébullition tels que mentionnés ici sont mesurés à pression atmosphérique, sauf indication contraire. Un point d'ébullition initial est défini comme la valeur de température à partir de laquelle une première bulle de vapeur est formée. Un point d'ébullition final est la plus haute température atteignable lors d'une distillation. A cette température, plus aucune vapeur ne peut être transportée vers un condensateur. La détermination des points initial et final fait appel à des techniques connues du métier et plusieurs méthodes adaptées en fonction du domaine de températures de distillation sont applicables, par exemple NF EN 15199-1 (version 2020) ou ASTM D2887 pour la mesure des points d'ébullition de fractions pétrolières par chromatographie en phase gazeuse, ASTM D7169 pour les hydrocarbures lourds, ASTM D7500, D86 ou D1160 pour les distillats.

La concentration en métaux dans les matrices hydrocarbonées peut être déterminée par toute méthode connue. Des méthodes acceptables incluent la fluorescence X (XRF) et la spectrométrie d'émission atomique à plasma à couplage inductif (ICP-AES). Les spécialistes en sciences analytiques savent identifier la méthode la plus adaptée à la mesure de chaque métal et chaque hétéro-élément en fonction de la matrice hydrocarbonée considérée.

Les caractéristiques particulières, structures, propriétés, modes de réalisation de l'invention peuvent être combinés librement en un ou plusieurs modes de réalisation non spécifiquement décrits ici, comme cela peut être apparent à des spécialistes du traitement des huiles de pyrolyse de plastique mettant en oeuvre leurs connaissances générales.

### Description de l'invention

### Exemples

Les modes de réalisation de la présente invention sont illustrés par les exemples non-limitatifs suivants.

### Exemple 1 : Purification de deux huiles de pyrolyse de plastique en présence d'une base forte et d'un alcool

Deux huiles de pyrolyse de plastique différentes, dont les caractéristiques physico-chimiques sont décrites dans le tableau 1, ci-dessous, sont utilisées :

**[Table 1] Tableau 1**

| Huile de pyrolyse | HPP1 | HPP2 |
|---|---|---|
| Densité (g/mL) | 0,741 | 0,800 |
| Viscosité cinématique (15°C, mm²/s) | 0,70 | 2,1 |
| Distillation, point initial (°C) | <36 | 69 |
| Distillation, 50% (°C) | 131 | 214 |
| Distillation, point final (°C) | 259 | 451 |
| Silicium (ppm massique) | 72 | 82 |
| Chlore (ppm massique) | 50 | 96 |
| Oxygène (% massique) | 1,6 | 0,87 |
| Azote (ppm poids) | 129 | 206 |
| Soufre (ppm poids) | 11 | 19 |

### Protocole d'essais :

Un autoclave en acier inoxydable de grade AISI-316L de 1,5 L équipé d'une agitation mécanique est chargé avec une huile de pyrolyse choisie parmi HPP1 et HPP2, une base forte sous la forme de NaOH et éventuellement un solvant ou de l'eau, selon les essais réalisés (tableau 2). La somme du volume d'huile de pyrolyse et du volume de solvant ou d'eau introduits est égale à 600 mL à température ambiante, sans tenir compte des effets éventuels de variation volumique lors de leur mélange. L'autoclave est fermé et le ciel gazeux dans l'autoclave est balayé à l'azote pendant 30 minutes. L'autoclave est ensuite chauffé sous pression autogène sous agitation à une vitesse de 400 à 1500 tours/minute à une température de 225 °C pendant une durée de 30 minutes, une fois que la température cible a été atteinte. La vitesse de montée en température est fixée à 30°C/10 minutes.

**[Table 2] Tableau 2**

| Essai | 1 | 2 | 3 | 4 | 5 | 6 | 7 |
|---|---|---|---|---|---|---|---|
| Huile de pyrolyse | HPP1 | HPP2 | HPP2 | HPP2 | HPP2 | HPP2 | HPP2 |
| Solvant ou eau | - | - | Eau | Eau | Méthanol | Ethanol | Isopropanol |
| Rapport solvant/charge | - | - | 0,02 | 0,53 | 0,53 | 0,53 | 0,53 |
| Volume de solvant ou d'eau (mL) | 0 | 0 | 14 | 209 | 191 | 191 | 191 |
| Masse de NaOH (g) | 22,2 | 24,0 | 14,0 | 4,2 | 3,8 | 3,8 | 3,8 |
| Masse d'huile de pyrolyse (g) | 444,7 | 480,1 | 468,9 | 312,9 | 287,0 | 286,0 | 286,0 |
| Masse volumique initiale (g/mL) | 741,2 | 800,2 | 800,2 | 800,2 | 800,2 | 800,2 | 800,2 |
| Masse volumique finale (g/mL) | 746,4 | 792,8 | 793,1 | 793,7 | 792,9 | 793,0 | 792,2 |
| Pression finale dans l'autoclave (bars) | 12 | 5 | 12 | 27 | 45 | 31 | 24 |

A l'issue de la réaction, l'autoclave est refroidi à température ambiante puis le mélange est déchargé et lavé trois fois avec de l'eau avec, à chaque lavage, un ratio en volume eau/charge = 40/60, pour éliminer les résidus de base forte et les impuretés solubles dans l'eau. L'huile de pyrolyse purifiée et lavée résultante est analysée pour mesurer la teneur en impuretés résiduelles (tableau 3).

**[Table 3] Tableau 3**

| Essai | 1 | 2 | 3 | 4 | 5 | 6 | 7 |
|---|---|---|---|---|---|---|---|
| Huile de pyrolyse | HPP1 | HPP2 | HPP2 | HPP2 | HPP2 | HPP2 | HPP2 |
| Silicium initial (ppm poids) | 72 | 82 | 82 | 82 | 82 | 82 | 82 |
| Silicium final (ppm poids) | 2 | <2 | <2 | 17 | 2 | 3 | 3 |
| Silicium abattement (%) | 97 | >98 | >98 | 79 | 98 | 96 | 96 |
| Chlore initial (ppm poids) | 50 | 96 | 96 | 96 | 96 | 96 | 96 |
| Chlore final (ppm poids) | 17 | 14 | 16 | 16 | 15 | 17 | 22 |
| Chlore abattement (%) | 66 | 85 | 83 | 83 | 84 | 82 | 77 |
| Oxygène initial (% poids) | 1,6 | 0,87 | 0,87 | 0,87 | 0,87 | 0,87 | 0,87 |
| Oxygène final (% poids) | 0,04 | 0,06 | 0,08 | 0,15 | 0,13 | n.d. | 0,08 |
| Oxygène abattement (%) | 98 | 93 | 91 | 83 | 85 | n.d. | 91 |
| Azote initial (ppm poids) | 129,0 | 206,4 | 206,4 | 206,4 | 206,4 | 206,4 | 206,4 |
| Azote final (ppm poids) | 16,6 | 31,1 | 31,7 | 47,8 | 31,5 | n.d. | 33,0 |
| Azote abattement (%) | 87 | 85 | 85 | 77 | 85 | n.d. | 84 |

| | | | | | | | |
|---|---|---|---|---|---|---|---|
| n.d. : non déterminé | | | | | | | |

On observe un meilleur abattement particulièrement pour le silicium et l'azote lorsque la réaction est conduite en présence d'un alcool (essais 5 à 7) par rapport à l'utilisation d'eau (essai 4), à concentration en soude presque équivalente (un peu plus concentrée lorsque la soude est en solution dans de l'eau).

En outre, l'essai 2 montre que l'utilisation de soude solide permet un meilleur abattement du chlore, de l'oxygène et de l'azote que lorsque la soude est en solution, que ce soit dans de l'eau ou dans un alcool, tout en permettant un excellent abattement du silicium, équivalent à l'essai 3 lorsque la soude est en solution à 50% en poids dans l'eau.

Une analyse de quelques autres éléments et propriétés a été conduite et est présentée dans le tableau 4, ci-dessous :

**[Table 4] Tableau 4**

| Essai | HPP2 | 3 | 7 |
|---|---|---|---|
| Ca (mg/kg) | 0,3 | <0,25 | <0,25 |
| Fe (mg/kg) | 2,2 | 0,5 | 1,2 |
| Na (mg/kg) | <2,0 | <2,0 | <2,0 |
| P (mg/kg) | 1,6 | <0,25 | <0,25 |
| S (ppm poids) | 19,3 | 10,5 | 11 |
| S abattement (%) | - | 46 | 43 |
| MAV (mg d'anhydride maléique/g) | 13,9 | 12,8 | 14,7 |
| Indice de brome (g de brome/100g) | 70 | 70 | 72 |

Les données du tableau 4 montrent que l'utilisation de soude en présence d'un alcool (isopropanol, essai 7) donne des résultats sensiblement équivalents à l'utilisation de soude concentrée dans l'eau (essai 3), alors qu'on utilise avantageusement 3,8 g de soude pour 286 g de charge HPP2 dans l'essai 7 versus 14,0 g de soude pour 468,9g de charge HPP2 dans l'essai 3.

La spéciation des familles d'hydrocarbures a permis de montrer que le procédé de traitement utilisant une base forte en présence d'un alcool n'affectait pas significativement le profil de composition de l'huile de pyrolyse de plastique (tableau 5). Résultats présentés en unités arbitraires, valeurs relatives.

**[Table 5] Tableau 5**

| Essai | HPP2 | 7 |
|---|---|---|
| n- et iso-paraffines | 45,3 | 45,2 |
| Oléfines | 34,2 | 35 |
| Mono-naphtènes | 4,3 | 4,6 |
| Poly-naphtènes | 4,7 | 4,7 |
| Mono-aromatiques | 9,8 | 10,9 |
| Di-aromatiques | 0,58 | 0,62 |
| Tri-aromatiques | 0,08 | 0,16 |

L'huile de pyrolyse peut être, soit utilisée telle quelle, soit éventuellement séchée sur un adsorbant tel qu'un tamis moléculaire ou un sel anhydre, par exemple Na₂SO₄, puis est distillée sous pression réduite afin d'éliminer toute trace éventuelle de solide, par exemple de base forte, de résidu d'adsorbant, de sel anhydre/hydraté ou de gommes.

Alternativement, le mélange directement issu de l'autoclave pourrait être distillé sous pression réduite jusqu'à une pression de 1 mbar et à une température de 200 à 250 °C pour collecter une huile de pyrolyse purifiée en tant que distillat et un résidu comprenant la base forte associée à des impuretés.

### Exemple 2 : Hydrotraitement en deux étapes et vapocraquage du produit de l'exemple 1

L'une des sept huiles de pyrolyse purifiées et lavées de l'exemple 1 peut être hydrotraitée en deux étapes selon la procédure suivante :
L'huile de pyrolyse purifiée et lavée peut être introduite dans une première section d'hydrotraitement (HDT1) essentiellement pour hydrogéner les dioléfines et est opérée en phase liquide. Cette étape peut comprendre une pluralité de réacteurs en série et/ou parallèle si des réacteurs de garde sont utilisés en amont ou en aval du premier réacteur d'hydrogénation. Ces réacteurs de garde peuvent permettre de réduire la concentration en certaines espèces chimiques indésirables et/ou en éléments tels que le chlore, le silicium et les métaux. Des métaux particulièrement indésirables incluent Na, Ca, Mg, Fe et Hg.

Une seconde section d'hydrotraitement (HDT2) est dédiée à l'hydrogénation des oléfines et à la démétallation (HDM), la désulfuration (HDS), la désazotation (HDN) et la désoxygénation (HDO). HDT2 est opérée en phase gazeuse. Cette section consiste en un ou plusieurs réacteurs opérés en série, en avance-retard (« lead-lag ») ou en parallèle. Comme les réactions d'hydrotraitement dans les sections HDT1 et HDT2 sont exothermiques, une trempe par de l'hydrogène froid peut être utilisée pour modérer l'accroissement de température et contrôler la réaction.

Des réacteurs de garde isolés, en avance-retard (« lead-lag »), en série et/ou en parallèle peuvent être envisagés selon la nature et la quantité du contaminant dans le flux à traiter.

Dans l'hypothèse où le traitement de l'exemple 1 ne permettrait pas d'obtenir un abattement suffisant en impuretés, des réacteurs de garde pour éliminer le chlore et le silicium peuvent être opérés en phase gazeuse. Le silicium peut aussi être piégé sur le lit supérieur d'un réacteur de la section HDT2 ou séparément, en amont ou en aval par le traitement des gaz chauds quittant la section HDT2.

Le chlore et le mercure peuvent être séparés par des réacteurs de garde en phase liquide ou gazeuse.

Il peut y avoir des trempes intermédiaires entre les lits ou entre les réacteurs HDT1 et HDT2 ou pas de trempe. Dans ce dernier cas, un recyclage d'une partie du flux sortant du HDT1 ou du HDT2 doit être réalisée pour contrôler la température. Un contrôle strict de la température dans HDT1 doit être conduit, afin d'éviter le bouchage du réacteur et la dégradation des conditions d'hydrogénation catalytique.

La pression opératoire dans chacun des hydrotraitements HDT1 et HDT2 est de 5-60 bars, de préférence 20-30 bars pour HDT1 et 20-140 bars, de préférence 30-60 bars pour HDT2, typiquement 30-40 bars pour HDT2.

Plage de température typique à l'entrée de HDT1 en début de cycle (SOR : start of run) : 150-200°C. Le catalyseur pour HDT 1 comprend habituellement Pd (0,1-10% poids) et/ou Ni (0,1-60% poids) et/ou NiMo (0,1-60% poids).

Plage de température typique à l'entrée de HDT2 en début de cycle (SOR : start of run) : 200-340°C. Domaine typique de température de sortie de HDT2 (SOR) : 300-380°C, jusqu'à 450°C. Le catalyseur pour HDT 2 comprend habituellement un NiMo (tout type de catalyseur commercial pour application raffinage ou pétrochimie), potentiellement un CoMo dans les tout derniers lits en fond de réacteur (tout type de catalyseur commercial pour application raffinage ou pétrochimie).

Le lit supérieur du HDT2 devrait être opéré de préférence avec un NiMo ayant une capacité hydrogénante ainsi qu'une capacité de piégeage de silicium. Un lit supérieur de ce type peut être considéré comme un adsorbant ainsi qu'un piège à métaux ayant aussi une activité HDN et une capacité hydrogénante. Un exemple de lit supérieur acceptable pour cette fonction comprend les adsorbants catalyseurs NiMo commercialement disponibles tels que ACT971, ACT981 d'Axens ou équivalents chez Haldor Topsoe, Axens, Criterion, etc. Il est possible d'avoir deux lits séparés dans un réacteur HDT2, avec une trempe entre les deux lits ou entre les deux réacteurs, si les deux lits sont dans deux réacteurs distincts, ou pas de trempe du tout. Idéalement, la trempe intermédiaire est effectuée au moyen d'effluent froid d'HDT2 ou par un apport d'hydrogène froid, c'est-à-dire à une température allant généralement de 15 à 30°C, afin de contrôler l'exotherme du HDT2. Une dilution par recycle du flux d'hydrocarbure vers le lit supérieur d'HDT2 n'est pas recommandé en raison des risques accrus d'encrassement du lit. La charge arrivant sur le catalyseur d'HDT2 devrait être totalement vaporisée à tout moment, y-compris en régime variable comme c'est le cas lors des démarrages. L'envoi d'hydrocarbures liquides sur le lit supérieur d'un réacteur HDT2 peut générer de l'encrassement et un accroissement de la différence de pression entre l'entrée et la sortie dudit réacteur HDT2 et conduire à un arrêt prématuré.

En fonction des métaux présents dans l'huile de pyrolyse à hydrotraiter, un catalyseur d'hydrodémétallation, par exemple commercial, peut être ajouté sur le lit supérieur de la section HDT2 afin de protéger de la désactivation les lits catalytiques inférieurs.

L'huile de pyrolyse hydrotraitée quittant la section HDT2 peut être utilisée telle quelle ou fractionnée selon des plages de température de distillation, pour alimenter un vapocraqueur, un FCC, un hydrocraqueur, un reformeur catalytique ou un pool de carburants ou combustibles tels que GPL, essence, jet, diesel, fuel.

Alternativement, l'huile de pyrolyse traitée quittant la section HDT2 subit une étape de purification supplémentaire par passage sur une masse de captation telle qu'un adsorbant, par exemple (i) un gel de silice, (ii) une argile, (iii) une argile pilée, (iv) de l'apatite, (v) de l'hydroxyapatite et leurs combinaisons, (vi) une alumine par exemple une alumine obtenue par précipitation de boehmite, une alumine calcinée telle que Ceralox ^{®} de Sasol, (vii) de la boehmite, (viii) de la bayerite, (ix) de l'hydrotalcite, (x) un spinelle tel que Pural ^{®} ou Puralox de Sasol, (xi) une alumine promue, par exemple Selexsorb ^{®} de BASF, une alumine promue acide, une alumine promue par une zéolithe et/ou par un métal tel que Ni, Co, Mo ou une combinaison d'au moins deux d'entre eux, (xii) une argile traitée par un acide telle que Tonsil ^{®} de Clariant, (xiii) un tamis moléculaire sous la forme d'un aluminosilicate contenant un cation alcalin ou alcalino-terreux par exemple les tamis 3A, 4A, 5A, 13X, par exemple commercialisés sous la marque Siliporite ^{®} de Ceca, (xiv) une zéolithe, (xv) un charbon actif, ou la combinaison d'au moins deux adsorbants, l'adsorbant ou les au moins deux adsorbants retenant au moins 20% en poids, de préférence au moins 50% en poids d'au moins un élément parmi F, Cl, Br, I, O, N, S, Se, Si, P, As, Fe, Ca, Na, K, Mg et Hg et/ou de l'eau. Idéalement, l'adsorbant est régénérable, a une surface spécifique d'au moins 200 m²/g et est opéré dans un réacteur à lit fixe à moins de 100°C avec une VVH de 0,1 à 10 h⁻¹.

## Revendications

1. Procédé de diminution de la concentration en hétéroatomes d'une composition comprenant une huile de pyrolyse de plastique contenant au moins 20 ppm en masse de chlore tel que mesuré selon la norme ASTM D7359-18, comprenant :
(a). une mise en contact de ladite composition avec 0,1-50% en masse d'une base forte comprenant un cation de métal alcalin ou alcalino-terreux à l'état solide, pendant au moins 1 minute à une température d'au plus 450°C,
(b). une séparation entre la base forte comprenant le cation de métal alcalin ou alcalino-terreux et le produit issu de la mise en contact de ladite composition par lavage avec un solvant polaire non miscible avec le produit issu de l'étape (a).

2. Procédé selon la revendication 1, dans lequel la composition comprend en outre une huile de pyrolyse de biomasse telle que de *Panicum virgatum,* une huile de tall, une huile alimentaire usagée, une graisse animale, une huile végétale telle qu'une huile de colza, de canola, de ricin, de palme, de soja, une huile extraite d'une algue, une huile extraite d'une fermentation de microorganismes oléagineux tels que des levures oléagineuses, une huile de pyrolyse de biomasse telle qu'une biomasse lignocellulosique telle qu'une huile de pyrolyse de bois, de papier et/ou de carton, une huile obtenue par pyrolyse de meubles usagés broyés, une huile de pyrolyse d'élastomères par exemple du latex éventuellement vulcanisé ou des pneus, ainsi que leurs mélanges.

3. Procédé selon la revendication 1 ou 2, comprenant en outre une étape dans laquelle :
(c) le produit issu du lavage à l'étape (b) est soumis à une (i) filtration, (ii) distillation, (iii) extraction par un solvant, ou (iv) la combinaison de deux ou trois des étapes (i) à (iii).

4. Procédé selon la revendication 1, 2 ou 3, dans lequel la mise en contact s'effectue pendant une durée de 1 minute à 48 heures, de préférence de 5 minutes à 2 heures, à une température de 50 à 450°C, de préférence de 90 à 350°C, plus préférentiellement de 150 à 350°C et à une pression absolue de 0,1 à 100 bars, de préférence de 1 à 50 bars.

5. Procédé selon l'une quelconque des revendications 1 à 4, dans lequel le lavage de l'étape (b) s'effectue avec un solvant polaire choisi parmi (i) les éthers de glycol, incluant notamment le polyéthylène glycol de formule chimique HO-(CH₂-CH₂-O)ₙ-H de masse molaire moyenne en masse de 90 à 800g/mol, par exemple le diéthylène glycol et le tétraéthylène glycol, le polypropylène glycol de formule chimique H[OCH(CH₃)CH₂]ₙOH de masse molaire moyenne en masse de 130 à 800g/mol, par exemple le dipropylène glycol et le tétrapropylène glycol, (ii) les dialkyl formamides, dans lesquels le groupe alkyl peut comprendre de 1 à 8 ou de 1 à 3 atomes de carbones, notamment le *N,N*-diméthyl formamide (DMF), (iii) les dialkyl sulfoxydes, dans lesquels le groupe alkyl peut comprendre de 1 à 8 ou de 1 à 3 atomes de carbones, notamment le diméthylsulfoxyde (DMSO) et le sulfolane, (iv) les composés comprenant un cycle furane, (v) des esters de carbonate cycliques, comprenant notamment de 3 à 8 ou de 3 à 4 atomes de carbones, notamment le carbonate de propylène et le carbonate d'éthylène, (vi) l'eau et leurs mélanges.

6. Procédé selon l'une quelconque des revendications 1 à 5, dans lequel le lavage de l'étape (b) s'effectue avec de l'eau.

7. Procédé selon l'une quelconque des revendications 1 à 6, dans lequel la base forte est choisie parmi LiOH, NaOH, CsOH, Ba(OH)₂, Na₂O, KOH, K₂O, CaO, Ca(OH)₂, MgO, Mg(OH)₂ et leurs mélanges.

8. Procédé selon l'une des revendications 1 à 7, dans lequel :
(d) le produit issu de l'étape (b) ou (c) subit une hydrogénation catalytique en une ou deux étapes.

9. Procédé selon la revendication 8, dans lequel l'hydrogénation catalytique de l'étape (d) s'effectue en une première étape (d-1) dans laquelle le produit issu de l'étape (b) ou (c) est hydrogéné à une température comprise entre 20 et 200°C, de préférence entre 30 et 90°C en présence d'hydrogène à une pression absolue comprise entre 5 et 60 bars, de préférence entre 20 et 30 bars et en présence d'un catalyseur d'hydrogénation comprenant Pd (0.1-10 % en poids) et/ou Ni (0.1-60 % en poids) et/ou NiMo (0.1-60 % en poids), et en une deuxième étape (d-2) dans laquelle l'effluent issu de l'étape (d-1) est hydrogéné à une température comprise entre 200 et 450°C, de préférence entre 200 et 340°C en présence d'hydrogène à une pression absolue comprise entre 20 et 140 bars, de préférence entre 30 et 60 bars et en présence d'un catalyseur d'hydrogénation comprenant NiMo (0.1-60 % en poids) et/ou CoMo (0.1-60 % en poids).

10. Procédé selon l'une quelconque des revendications 1 à 9, dans lequel le produit issu de l'étape (b) ou (c) ou l'effluent issu de l'étape (d) est purifié par passage sur un adsorbant solide afin de diminuer la teneur en au moins un élément parmi F, Cl, Br, I, O, N, S, Se, Si, P, As, Fe, Ca, Na, K, Mg et Hg et/ou la teneur en eau.

11. Procédé selon la revendication 10, dans lequel l'adsorbant est opéré en mode régénératif ou non régénératif, à une température inférieure à 400°C, de préférence inférieure à 100°C, plus préférentiellement inférieure à 60°C choisi parmi : (i) un gel de silice, (ii) une argile, (iii) une argile pilée, (iv) de l'apatite, (v) de l'hydroxyapatite et leurs combinaisons, (vi) une alumine par exemple une alumine obtenue par précipitation de boehmite, une alumine calcinée, (vii) de la boehmite, (viii) de la bayerite, (ix) de l'hydrotalcite, (x) un spinelle, (xi) une alumine promue, une alumine promue acide, une alumine promue par une zéolithe et/ou par un métal tel que Ni, Co, Mo ou une combinaison d'au moins deux d'entre eux, (xii) une argile traitée par un acide, (xiii) un tamis moléculaire sous la forme d'un aluminosilicate contenant un cation alcalin ou alcalino-terreux par exemple les tamis 3A, 4A, 5A, 13X, (xiv) une zéolithe, (xv) un charbon actif, ou la combinaison d'au moins deux adsorbants, l'adsorbant ou les au moins deux adsorbants retenant au moins 20% en poids, de préférence au moins 50% en poids d'au moins un élément parmi F, Cl, Br, I, O, N, S, Se, Si, P, As, Fe, Ca, Na, K, Mg et Hg et/ou de l'eau.

12. Procédé selon la revendication 11, dans lequel l'adsorbant est régénérable, a une surface spécifique d'au moins 200 m²/g et est opéré dans un réacteur à lit fixe à moins de 100°C avec une VVH de 0,1 à 10 h⁻¹.

13. Procédé selon l'une quelconque des revendications 1 à 12, dans lequel au moins une partie du produit issu de l'étape (b) ou (c) ou de l'effluent issu de l'étape (d) est :
(e) traité dans un vapocraqueur, et/ou
(f) traité dans un craqueur catalytique en lit fluidisé, et/ou
(g) traité dans un hydrocraqueur, et/ou
(h) traité dans une unité d'hydrogénation catalytique, et/ou
(i) utilisé tel quel ou séparé en des flux utilisables pour la préparation de carburants et combustibles tels que GPL, essence, diesel, fuel lourd et/ou pour la préparation de lubrifiants.

## Patentansprüche

1. Verfahren zur Verringerung der Heteroatomkonzentration einer Zusammensetzung, die ein Kunststoffpyrolyseöl umfasst, das mindestens 20 ppm Massenanteil Chlor, gemessen nach ASTM D7359-18, enthält, umfassend:
(a). Inkontaktbringen der Zusammensetzung mit 0,1-50 Gew.-% einer starken Base, die ein Alkali- oder Erdalkalimetallkation in festem Zustand umfasst, für mindestens 1 Minute bei einer Temperatur von höchstens 450 °C,
(b). Trennen der starken Base, die das Alkalimetall- oder Erdalkalimetallkation umfasst, von dem Produkt, das aus dem Inkontaktbringen der Zusammensetzung durch Waschen mit einem polaren Lösungsmittel, das mit dem Produkt aus Schritt (a) nicht mischbar ist, entsteht.

2. Verfahren nach Anspruch 1, wobei die Zusammensetzung ferner ein Pyrolyseöl aus Biomasse wie *Panicum virgatum,* Tallöl, gebrauchtes Speiseöl, tierisches Fett, Pflanzenöl wie Raps-, Canola-, Rizinus-, Palm-, Sojaöl, aus Algen extrahiertes Öl, ein Öl, das aus einer Fermentation von ölhaltigen Mikroorganismen wie Ölhefe gewonnen wird, ein Öl aus der Pyrolyse von Biomasse wie lignozellulosehaltiger Biomasse wie Pyrolyseöl aus Holz, Papier und/oder Karton, ein Öl, das durch Pyrolyse von zerkleinerten Altmöbeln gewonnen wird, ein Öl aus der Pyrolyse von Elastomeren wie beispielsweise gegebenenfalls vulkanisiertem Latex oder Reifen, sowie deren Mischungen umfasst.

3. Verfahren nach Anspruch 1 oder 2, welches ferner einen Schritt umfasst, wobei:
(c) das Produkt aus dem Waschen in Schritt (b) einer (i) Filtration, (ii) Destillation, (iii) Lösungsmittelextraktion oder (iv) einer Kombination von zwei oder drei der Schritte (i) bis (iii) unterzogen wird.

4. Verfahren nach Anspruch 1, 2 oder 3, wobei das Inkontaktbringen über einen Zeitraum von 1 Minute bis 48 Stunden, vorzugsweise von 5 Minuten bis 2 Stunden, bei einer Temperatur von 50 bis 450 °C, vorzugsweise von 90 bis 350 °C, besonders bevorzugt von 150 bis 350 °C und bei einem absoluten Druck von 0,1 bis 100 bar, vorzugsweise von 1 bis 50 bar, erfolgt.

5. Verfahren nach einem der Ansprüche 1 bis 4, wobei das Waschen in Schritt (b) mit einem polaren Lösungsmittel erfolgt, das ausgewählt ist aus (i) Glykolethern, einschließlich insbesondere Polyethylenglykol der chemischen Formel HO- (CH₂-CH₂-O)ₙ-H mit einer massenmittleren Molmasse von 90 bis 800 g/mol, zum Beispiel Diethylenglykol und Tetraethylenglykol, Polypropylenglykol der chemischen Formel H[OCH(CH₃)CH₂]ₙOH mit einem gewichtsmittleren Molekulargewicht von 130 bis 800 g/mol, zum Beispiel Dipropylenglykol und Tetrapropylenglykol, (ii) Dialkylformamiden, wobei die Alkylgruppe 1 bis 8 oder 1 bis 3 Kohlenstoffatome umfassen kann, insbesondere N,N-Dimethylformamid (DMF), (iii) Dialkylsulfoxiden, wobei die Alkylgruppe 1 bis 8 oder 1 bis 3 Kohlenstoffatome umfassen kann, insbesondere Dimethylsulfoxid (DMSO) und Sulfolan, (iv) Verbindungen, die einen Furanring umfassen, (v) cyclische Carbonatester, die insbesondere 3 bis 8 oder 3 bis 4 Kohlenstoffatome umfassen, insbesondere Propylencarbonat und Ethylencarbonat, (vi) Wasser und deren Mischungen.

6. Verfahren nach einem der Ansprüche 1 bis 5, wobei das Waschen in Schritt (b) mit Wasser erfolgt.

7. Verfahren nach einem der Ansprüche 1 bis 6, wobei die starke Base ausgewählt ist aus LiOH, NaOH, CsOH, Ba(OH)₂, Na₂O, KOH, K₂O, CaO, Ca(OH)₂, MgO, Mg(OH)₂ und Mischungen davon.

8. Verfahren nach einem der Ansprüche 1 bis 7, wobei:
(d) das Produkt aus Schritt (b) oder (c) einer katalytischen Hydrierung in einem oder zwei Schritten unterzogen wird.

9. Verfahren nach Anspruch 8, wobei die katalytische Hydrierung in Schritt (d) in einem ersten Schritt (d-1) erfolgt, in dem das Produkt aus Schritt (b) oder (c) bei einer Temperatur zwischen 20 und 200 °C, vorzugsweise zwischen 30 und 90 °C in Gegenwart von Wasserstoff bei einem absoluten Druck zwischen 5 und 60 bar, vorzugsweise zwischen 20 und 30 bar, und in Gegenwart eines Hydrierungskatalysators hydriert wird, der Pd (0,1-10 Gew.-%) und/oder Ni (0,1-60 Gew.-%) und/oder NiMo (0,1-60 Gew.-%) umfasst, und in einem zweiten Schritt (d-2), wobei der Ausfluss aus Schritt (d-1) bei einer Temperatur zwischen 200 und 450 °C, vorzugsweise zwischen 200 und 340 °C, in Gegenwart von Wasserstoff bei einem absoluten Druck zwischen 20 und 140 bar, vorzugsweise zwischen 30 und 60 bar, und in Gegenwart eines Hydrierungskatalysators, der NiMo (0,1-60 Gew.-%) und/oder CoMo (0,1-60 Gew.-%) umfasst, hydriert wird.

10. Verfahren nach einem der Ansprüche 1 bis 9, wobei das Produkt aus Schritt (b) oder (c) oder der Ausfluss aus Schritt (d) gereinigt wird, indem es über ein festes Adsorptionsmittel geleitet wird, um den Gehalt an mindestens einem der Elemente F, Cl, Br, I, O, N, S, Se, Si, P, As, Fe, Ca, Na, K, Mg und Hg und/oder den Wassergehalt zu verringern.

11. Verfahren nach Anspruch 10, wobei das Adsorptionsmittel im regenerativen oder nichtregenerativen Modus bei einer Temperatur von weniger als 400 °C, vorzugsweise weniger als 100 °C, besonders bevorzugt weniger als 60 °C betrieben wird, ausgewählt aus: (i) Kieselgel, (ii) Ton, (iii) Stampflehm, (iv) Apatit, (v) Hydroxylapatit und Kombinationen davon, (vi) Aluminiumoxid, zum Beispiel Aluminiumoxid, das durch Ausfällung von Böhmit erhalten wurde, kalziniertes Aluminiumoxid, (vii) Böhmit, (viii) Bayerit, (ix) Hydrotalcit, (x) einem Spinell, (xi) einem promovierten Aluminiumoxid, einem säurepromovierten Aluminiumoxid, einem Aluminiumoxid, das durch einen Zeolith und/oder durch ein Metall wie Ni, Co, Mo oder eine Kombination von mindestens zwei davon promoviert wurde, (xii) einem säurebehandelten Ton, (xiii) einem Molekularsieb in Form eines Aluminosilikats, das ein Alkali- oder Erdalkalikation enthält, zum Beispiel die Siebe 3A, 4A, 5A, 13X, (xiv) einem Zeolithen, (xv) einer Aktivkohle oder der Kombination von mindestens zwei Adsorptionsmitteln, wobei das Adsorptionsmittel oder die mindestens zwei Adsorptionsmittel mindestens 20 Gew.-%, vorzugsweise mindestens 50 Gew.-%, mindestens eines Elements aus F, Cl, Br, I, O, N, S, Se, Si, P, As, Fe, Ca, Na, K, Mg und Hg und/oder Wasser zurückhält/zurückhalten.

12. Verfahren nach Anspruch 11, wobei das Adsorptionsmittel regenerierbar ist, eine spezifische Oberfläche von mindestens 200 m²/g aufweist und in einem Festbettreaktor bei weniger als 100 °C mit einer VVH von 0,1 bis 10 h⁻¹ betrieben wird.

13. Verfahren nach einem der Ansprüche 1 bis 12, wobei mindestens ein Teil des Produkts aus Schritt (b) oder (c) oder des Ausflusses aus Schritt (d):
(e) in einem Steamcracker behandelt wird, und/oder
(f) in einem katalytischen Wirbelschichtkracker behandelt wird und/oder
(g) in einem Hydrocracker behandelt wird und/oder
(h) in einer katalytischen Hydriereinheit behandelt wird und/oder
(i) als solche verwendet oder in Ströme aufgetrennt wird, die für die Herstellung von Kraft- und Brennstoffen wie LPG, Benzin, Diesel, Schweröl und/oder für die Herstellung von Schmiermitteln verwendbar sind.

## Claims

1. A method for reducing the heteroatom concentration of a composition comprising a plastic pyrolysis oil containing at least 20 ppm by weight of chlorine as measured according to the standard ASTM D7359-18, comprising:
(a) contacting said composition with 0.1-50% by weight of a strong base comprising an alkali or alkaline-earth metal cation in the solid state for at least 1 minute at a temperature of at most 450°C,
(b) separating the strong base comprising the alkali or alkaline-earth metal cation and the product resulting from contacting said composition by washing with a polar solvent immiscible with the product resulting from step (a).

2. The method according to claim 1, wherein the composition further comprises a biomass pyrolysis oil such as *Panicum virgatum,* a tall oil, a waste food oil, an animal fat, a vegetable oil such as a rapeseed oil, a canola oil, a castor oil, a palm oil, a soybean oil, an oil extracted from an algae, an oil extracted from the fermentation of oleaginous microorganisms such as oleaginous yeasts, an oil resulting from the pyrolysis of a biomass such as a lignocellulosic biomass such as a wood, paper and/or cardboard pyrolysis oil, an oil obtained by pyrolysis of ground used furniture, an oil resulting from the pyrolysis of elastomers, for example latex, possibly vulcanised, or tyres, as well as mixtures thereof.

3. The method according to claim 1 or 2, further comprising a step in which:
(c) the product derived from the washing in step (b) is subjected to (i) filtration, (ii) distillation, (iii) solvent extraction, or (iv) the combination of two or three of steps (i) to (iii).

4. The method according to claim 1, 2 or 3, wherein the contact lasts for a time period of 1 minute to 48 hours, preferably from 5 minutes to 2 hours, at a temperature of 50 to 450°C, preferably from 90 to 350°C, more preferably from 150 to 350°C and at an absolute pressure of 0.1 to 100 bar, preferably from 1 to 50 bar.

5. The method according to any one of claims 1 to 4, wherein the washing of step (b) is performed with a polar solvent selected from among (i) glycol ethers, including in particular polyethylene glycol of chemical formula HO- (CH₂-CH₂-O)ₙ-H with an average molar mass of 90 to 800 g/mol, for example diethylene glycol and tetraethylene glycol, polypropylene glycol of chemical formula H[OCH(CH₃)CH₂]ₙOH with an average molar mass of 130 to 800 g/mol, for example dipropylene glycol and tetrapropylene glycol, (ii) dialkyl formamides, wherein the alkyl group may comprise from 1 to 8 or from 1 to 3 carbon atoms, in particular N,N-dimethyl formamide (DMF), (iii) dialkyl sulfoxides, wherein the alkyl group may comprise from 1 to 8 or from 1 to 3 carbon atoms, in particular dimethyl sulfoxide (DMSO) and sulfolane, (iv) compounds comprising a furan ring, (v) cyclic carbonate esters, in particular comprising from 3 to 8 or from 3 to 4 carbon atoms, in particular propylene carbonate and ethylene carbonate, (vi) water and mixtures thereof.

6. The method according to any one of claims 1 to 5, wherein the washing of step (b) is performed with water.

7. The method according to any one of claims 1 to 6, wherein the strong base is selected from among LiOH, NaOH, CsOH, Ba(OH)₂, Na₂O, KOH, K₂O, CaO, Ca(OH)₂, MgO, Mg(OH)₂ and mixtures thereof.

8. The method according to one of claims 1 to 7, wherein:
(d) the product derived from step (b) or (c) undergoes catalytic hydrogenation in one or two step(s).

9. The method according to claim 8, wherein the catalytic hydrogenation of step (d) is performed in a first step (d-1) in which the product derived from step (b) or (c) is hydrogenated at a temperature comprised between 20 and 200°C, preferably between 30 and 90°C in the presence of hydrogen at an absolute pressure comprised between 5 and 60 bar, preferably between 20 and 30 bar and in the presence of a hydrogenation catalyst comprising Pd (0.1-10% by weight) and/or Ni (0.1-60% by weight) and/or NiMo (0.1-60% by weight), and in a second step (d-2) in which the effluent derived from step (d-1) is hydrogenated at a temperature comprised between 200 and 450°C, preferably between 200 and 340°C in the presence of hydrogen at an absolute pressure comprised between 20 and 140 bar, preferably between 30 and 60 bar and in the presence of a hydrogenation catalyst comprising NiMo (0.1-60% by weight) and/or CoMo (0.1-60% by weight).

10. The method according to any one of claims 1 to 9, wherein the product derived from step (b) or (c) or the effluent derived from step (d) is purified by passage over a solid adsorbent in order to reduce the content of at least one amongst F, Cl, Br, I, O, N, S, Se, Si, P, As, Fe, Ca, Na, K, Mg and Hg and/or the water content.

11. The method according to claim 10, wherein the adsorbent is processed in regenerative or non-regenerative mode, at a temperature lower than 400°C, preferably lower than 100°C, more preferably lower than 60°C selected from among: (i) a silica gel, (ii) a clay, (iii) a crushed clay, (iv) apatite, (v) hydroxyapatite and combinations thereof, (vi) an alumina for example an alumina obtained by precipitation of boehmite, a calcined alumina, (vii) boehmite, (viii) bayerite, (ix) hydrotalcite, (x) a spinel, (xi) a promoted alumina, an acidic promoted alumina, an alumina promoted by a zeolite and/or by a metal such as Ni, Co, Mo or a combination of at least two of these, (xii) a clay treated by an acid, (xiii) a molecular sieve in the form of an aluminosilicate containing an alkali or alkaline-earth cation, for example the 3A, 4A, 5A, 13X sieves, (xiv) a zeolite, (xv) an activated carbon, or the combination of at least two adsorbents, the adsorbent or the at least two adsorbents retaining at least 20% by weight, preferably at least 50% by weight, of at least one amongst F, Cl, Br, I, O, N, S, Se, Si, P, As, Fe, Ca, Na, K, Mg and Hg and/or water.

12. The method according to claim 11, wherein the adsorbent is regenerable, has a specific surface area of at least 200 m²/g and is operated in a fixed-bed reactor at less than 100°C with an HSV of 0.1 to 10h⁻¹.

13. The method according to any one of claims 1 to 12, wherein at least one portion of the product derived from step (b) or (c) or the effluent derived from step (d) is:
(e) treated in a steam cracker, and/or
(f) treated in a fluidised-bed catalytic cracker, and/or
(g) treated in a hydrocracker, and/or
(h) treated in a catalytic hydrogenation unit, and/or
(i) used as such or separated into streams that could be used for the preparation of fuels and combustibles such as LPG, gasoline, diesel, heavy fuel and/or for the preparation of lubricants.
